# EUROPÄISCHE PATENTSCHRIFT

(11) **EP 0 925 703 B1**
(45) Veröffentlichungstag und Bekanntmachung des Hinweises auf die Patenterteilung: **15.03.2000**
(21) Anmeldenummer: 97918883.6
(22) Anmeldetag: 11.08.1997
(51) Int. Cl.: H04Q 7/38, H04Q 7/22

(54) **VERFAHREN UND KOMMUNIKATIONSSYSTEM ZUR ERSTMALIGEN EINTRAGUNG VON TEILNEHMERDATEN EINES MOBILTEILNEHMERS IN EINE ZENTRALE TEILNEHMERDATENBASIS**
PROCESS AND COMMUNICATION SYSTEM FOR THE FIRST REGISTRATION OF DATA CONCERNING A MOBILE SUBSCRIBER INTO A CENTRAL SUBSCRIBER DATA BASE
PROCEDE ET SYSTEME DE COMMUNICATION POUR LE PREMIER ENREGISTREMENT DES DONNEES D'UN ABONNE MOBILE DANS UNE BASE CENTRALE DE DONNEES D'ABONNES

(30) Priorität: 12.09.1996 DE 19637153
(43) Veröffentlichungstag der Anmeldung: 30.06.1999
(73) Patentinhaber: SIEMENS AKTIENGESELLSCHAFT, 80333 München (DE)
(72) Erfinder: FREITAG, Bernhard, D-36251 Bad Hersfeld (DE); REICH, Manfred, D-85244 Gro inzemoos (DE)
(86) Internationale Anmeldenummer: DE9701708
(87) Internationale Veröffentlichungsnummer: WO9811749

(56) Entgegenhaltungen:
- EP-A- 0 481 714
- WO-A-96/27270
- US-A- 5 077 790

## Beschreibung

Die Erfindung betrifft ein Verfahren und ein Kommunikationssystem zur erstmaligen Eintragung von Teilnehmerdaten eines Mobilteilnehmers, der in einem Mobilfunknetz durch eine Mobilteilnehmerkennung identifizierbar ist und mit einer Funkteilnehmerstation Anrufe entgegennehmen und absetzen möchte, in eine zentrale Teilnehmerdatenbasis.

Bekanntlich werden jedem Mobilteilnehmer eines Mobilfunknetzes, beispielsweise eines nach dem GSM-Standard betriebenen Kommunikationssystems, eine Mobilteilnehmerrufnummer zugeteilt und Telekommunikationsdienste dieser Mobilteilnehmerrufnummer zugeordnet und in mindestens einer zentralen Teilnehmerdatenbasis (Heimatregister) für den Mobilteilnehmer vorab eingetragen. Bei Erwerb der Funkteilnehmerstation, mit der der Mobilteilnehmer Anrufe entgegennehmen und absetzen kann, bzw. einer in eine Funkteilnehmerstation einführbare Chipkarte (SIM-Card, Subscriber Identity Module), anhand der eine Zuordnung der Funkteilnehmerstation zum Mobilteilnehmer erfolgt, werden üblicherweise vom Händler vorbereitete Dienstepakete vorgegebenen Umfangs angeboten. Dabei muß der Händler dem Diensteanbieter oder dem Netzbetreiber den Diensteumfang mitteilen, bevor die vorweg initialisierte Chipkarte, auf der die Mobilteilnehmerkennung des Mobilteilnehmers gespeichert ist, freigeschaltet werden kann. Erst danach kann die Funkteilnehmerstation Anrufe empfangen und aussenden. Individuelle Dienste oder spezielle Teilnehmerdaten wie beispielsweise eine Wunschrufnummer sind entweder gar nicht oder nur unter in Kaufnahme eines zeitraubenden gegenseitigen Informationsprozesses zwischen Händler, Diensteanbieter bzw. Netzbetreiber möglich.

Aus der internationalen Patentanmeldung WO-A-96/27270 sind ein Verfahren und eine Anordnung zum Programmieren eines mobilen Endgeräts mit jeweils von einem zellularen Mobilfunksystem zugewiesenen Identifikationsnummern über eine örtlich entfernte Stelle bzw. Einrichtung bekannt. Dabei werden Daten eines Mobilteilnehmers in mindestens eine zentrale Teilnehmerdatenbasis des Mobilfunksystems erstmalig eingetragen.

Es ist Aufgabe der vorliegenden Erfindung, ein Verfahren und ein Kommunikationssystem zur Eintragung von Teilnehmerdaten in eine zentrale Teilnehmerdatenbasis anzugeben, durch das die erstmalige Eintragung der Teilnehmerdaten möglichst einfach und flexibel erfolgt.

Diese Aufgabe wird gemäß der Erfindung durch die Merkmale des Patentanspruchs 1 hinsichtlich des Verfahrens und durch die Merkmale des Patentanspruchs 6 hinsichtlich des Kommunikationssystems gelöst.

Demnach wird ein Eintrag, bestehend aus einer Sonderrufnummer und einer Sperrinformation zum vorübergehenden Sperren der Anrufe für den Mobilteilnehmer, in der zentralen Teilnehmerdatenbasis gebildet und in die dezentrale Teilnehmerdatenbasis übernommen, die als erste für den Mobilfunkteilnehmer auf Grund seines aktuellen Aufenthaltsorts zur Aufenthaltsregistrierung zuständig ist. Sobald vom Mobilteilnehmer ein abgehender Anruf über die Funkteilnehmerstation erstmalig abgesetzt wird, erfolgt ein Verbindungsaufbau zu einer Anrufstelle auf Grund der in der dezentralen Teilnehmerdatenbasis gespeicherten Sonderrufnummer. Die Teilnehmerdaten einschließlich einer Mobilteilnehmerrufnumner werden über die Anrufstelle in die zentrale Teilnehmerdatenbasis eingetragen und dort die Sperrinformation rückgesetzt sowie die Sonderrufnummer gelöscht.

Auf diese Weise kann der Mobilteilnehmer baldmöglichst nach Erwerb einer Funkteilnehmerstation bzw. einer SIM-Chipkarte seine individuellen Teilnehmerdaten im Heimatregister auf flexible Art eingetragen erhalten, sobald er den ersten Verbindungswunsch durch Absetzen eines Anrufs zum Netz signalisiert. Durch die für ihn in der zentralen Teilnehmerdatenbasis eingetragene Sonderrufnummer wird nämlich eine Umlenkung der Verbindung, die auf Grund des abgehenden Anrufs üblicherweise aufzubauen ist, zu der Anrufstelle bewirkt. Die Sperrinformation dient zur Unterdrückung der Anrufe, bevor nicht die Teilnehmerdaten für den Mobil teilnehmer in der zentralen Teilnehmerdatenbasis registriert und somit das Entgegennehmen bzw. Absetzen von Anrufen im Mobilfunknetz möglich ist. Der Händler, der die Funkteilnehmerstation bzw. SIM-Chipkarte veräußert, ist in den Initialisierungsvorgang zum Freischalten der Karte bzw. der Funkteilnehmerstation nicht mehr involviert, was die zuvor angegebenen Nachteile einer mangelnden Gewährung von individuellen Teilnehmerdaten, insbesondere der nach Art und Umfang unterschiedlich gewünschten Dienste, sowie einer zeitaufwendigen Eintragungsprozedur vermeidet.

Gemäß einer Weiterbildung der Erfindung wird für den Mobilteilnehmer als Teilnehmerdatum eine spezielle Teilnehmerrufnummer (Wunschrufnummer) eingetragen, die von den jeweils von der zentralen Teilnehmerdatenbasis verwalteten Mobilteilnehmerrufnummern abweicht und von einer anderen zentralen Teilnehmerdatenbasis verwaltet wird. Dabei ist es von Vorteil, wenn in der anderen zentralen Teilnehmerdatenbasis eine Referenzinformation zur Identifikation der die Teilnehmerdaten enthaltenden zentralen Teilnehmerdatenbasis gespeichert wird.

Die Erfindung wird anhand eines in einer Figur dargestellten Ausführungsbeispiels erläutert, die in einem Blockschaltbild den Ablauf zur erstmaligen Eintragung der Teilnehmerdaten eines Mobilteilnehmers in Heimatregister des Mobilfunknetzes zeigt.

Ein Mobilteilnehmer, der eine Funkteilnehmerstation MS bzw. eine SIM-Chipkarte, die in eine Funkteilnehmerstation eingeführt wird, erwirbt, ist der Funkteilnehmerstation MS durch eine auf der Chipkarte gespeicherte internationale Mobilteilnehmerkennung IMSI zugeordnet. Die Mobilteilnehmerkennung dient der eindeutigen Identifikation des Mobil teilnehmers innerhalb eines Mobilfunknetzes, beispielsweise des internationalen GSM-Mobilkommunikationssystems (Global System for Mobile Communication). Die Zuordnung der Mobilteilnehmerkennung IMSI, die dem Mobilteilnehmer unbekannt ist, zu einer Mobilteilnehmerrufnummer MSISDN wird im Mobilfunknetz, im vorliegenden'Beispiel von der dezentralen Teilnehmerdatenbasis - dem Heimatregister - HLR getroffen. Bevor der Mobilteilnehmer mit der Funkteilnehmerstation MS Anrufe entgegennehmen und absetzen kann, müssen seine Teilnehmerdaten in einem Initialisierungsvorgang erstmalig in mindestens einer zentralen Teilnehmerdatenbasis, üblicherweise dem für ihn zuständigen Heimatregister, des Mobilfunknetzes hinterlegt werden. Die Teilnehmerdaten umfassen eine Vielzahl von Informationen, wie beispielsweise Basis-Telekommunikationsdienste, Zusatzdienste (Supplementary Services), Datendienste, Zugriffsberechtigung zu bestimmten Dienstestellen, Leitweginformationen zur Verbindungsbehandlung, mehrere Kennungen zum Adressieren und Identifizieren wie beispielsweise die internationale Mobilteilnehmerkennung IMSI und die internationale Mobilteilnehmerrufnummer MSISDN, usw..

Das zellular aufgebaute Mobilfunknetz weist einen funktechnischen Teil mit einem Basisstationssystem BSS und einen vermittlungstechnischen Teil mit Mobilvermittlungsstellen MSC, dezentralen Teilnehmerdatenbasen - Besucherregister - VLR und zentralen Teilnehmerdatenbasen - Heimatregister - HLR, RHLR auf. Jede Funkzelle des zellularen Mobilfunknetzes wird von einer Basis-Sende/Empfangsstation bedient, von denen eine oder mehrere Basis-Sende/Empfangsstationen jeweils an eine Basisstationssteuerung im Basisstationssystem BSS angeschlossen sind. Die Mobilvermittlungsstelle MSC, der ein Besucherregister VLR zugeordnet ist, bedient einerseits eine oder mehrere Basisstationssteuerungen des Basisstationssystems BSS und stellt andererseits Verbindungen zu anderen Netzen, wie beispielsweise dem öffentlichen Fernsprechnetz, her. Befindet sich ein Mobil teilnehmer im Versorgungsbereich eines Besucherregisters, sind seine Teilnehmerdaten im Besucherregister VLR vorübergehend für die Dauer seines Aufenthalts gespeichert. Dabei enthält das Besucherregister VLR sämtliche Teilnehmerdaten, die für die Verbindungsbehandlung, den Verbindungsaufbau und die Aufenthaltsregistrierung notwendig sind. Zusätzlich ist eine Anrufstelle OP vorgesehen, zu der eine Verbindung für das erstmalige Eintragen der Teilnehmerdaten in die Heimatregister aufgebaut wird. Die Anrufstelle OP ist über eine spezielle Rufnummer - wie nachfolgend näher erläutert - erreichbar und kann die Eintragung der individuellen Teilnehmerdaten für den Mobil teilnehmer über einen Operator in Form einer Maschine oder einer Bedienperson veranlassen.

Bei erstmaligem Einschalten der Funkteilnehmerstation MS bzw. bei einer Anforderung zur Aktualisierung der Aufenthaltsregistrierung wird von der Funkteilnehmerstation MS eine Nachricht LU (Location Update) initiiert, die über die für die Funkzelle, in der sich der Mobilteilnehmer befindet, zuständige Basis-Sende/Empfangsstation zur Mobilvermittlungsstelle MSC gesendet (1) wird. Die Mobilvermittlungsstelle MSC sendet daraufhin eine Aktualisierungsnachricht UL (Update Location) zum Heimatregister HLR aus, das durch die Mobilteilnehmerkennung IMSI festgelegt ist (2). Die Auswahl des richtigen Heimatregisters HLR erfolgt anhand der dem Besucherregister VLR in der Nachricht LU mitgeteilten Mobilteilnehmerkennung IMSI oder mit Hilfe von in der Nachricht LU gesendeten Informationen, aus denen die Mobilteilnehmerkennung IMSI ermittelt wird. Diese Informationen können z.B. aus einer Funkzellenkennung und/oder einer temporäre Mobilteilnehmerkennung bestehen. Für spätere Prozeduren beim Verbindungsaufbau kann das Heimatregister HLR auch anhand einer jeweils im Besucherregister VLR eingetragenen HLR-Adresse ausgewählt werden.

Im Heimatregister HLR wird ein Eintrag gebildet, bestehend aus einer Sonderrufnummer OPNU und einer Sperrinformation BAR, die zum vorübergehenden Sperren der Anrufe für den Mobilteilnehmer gesetzt wird (BAR=ACT). Ein derartiger Eintrag im Heimatregister HLR wird für jede, beispielsweise von einem Händler, verkaufte SIM-Chipkarte erstellt, um die Teilnehmerdaten für den durch die Mobilteilnehmerkennung IMSI identifizierbaren Mobilteilnehmer eintragen zu lassen, sobald der Mobilteilnehmer erstmals versucht, einen Anruf abzusetzen. Als Antwort auf die Nachricht UL sendet das Heimatregister HLR eine Nachricht ISD (Insert Subscriber Data) zum Besucherregister VLR zurück, in der die Sonderrufnummer OPNU beispielsweise als Mobilteilnehmerrufnummer MSISDN, die quasi eine virtuelle Mobilteilnehmerrufnummer und nicht bereits die für den Verbindungsaufbau im Netz erforderliche reale Mobilteilnehmerrufnummer darstellt, enthalten ist (3). Alternativ dazu kann die Sonderrufnummer OPNU auch in einem Feld, das üblicherweise für eine Nummer beim Sperren von Anrufen (call barring) oder beim Umlenken von Anrufen (call forwarding) reserviert ist, oder in einer speziellen Erweiterung der Nachricht ISD enthalten sein. Die Übertragung der Nachricht ISD zwischen Heimatregister HLR und Besucherregister VLR erfolgt gemäß dem mobilfunkspezifischen Anwenderteil (Mobile Application Part) des CCS7-Zeichengabesystems, der zur Kommunikation der Elemente des Mobilfunknetzes zur Steuerung des Netzzugangs der Funkteilnehmerstationen MS vorgesehen und für das vorliegende erfinderische Verfahren und System nicht geändert zu werden braucht.

Wenn von dem Mobilteilnehmer ein abgehender Anruf (Mobile Originating Call) über die Funkteilnehmerstation MS erstmalig abgesetzt wird, erkennbar von der Mobilvermittlungsstelle MSC an einer eintreffenden Nachricht SU (Setup Call) (4), ermittelt das für den Mobil teilnehmer auf Grund seines aktuellen Aufenthaltsorts als erste dezentrale Teilnehmerdatenbasis zuständige Besucherregister VLR, ob die Sperrinformation BAR für den Mobilteilnehmer aktiv ist. Liegt eine Sperrinformation vor, wird die dem initiierten Anruf zugrundeliegende Zielteilnehmerrufnummer durch die Sonderrufnummer OPNU ersetzt, um eine Verbindung von der Mobilvermittlungsstelle MSC zur Anrufstelle OP aufzubauen. Zu diesem Zweck wird zwischen der Mobilvermittlungsstelle MSC und der Anrufstelle OP eine Nachricht SUO zur Verbindungsherstellung übertragen (5). Die Anrufstelle OP kann von einem Netzbetreiber oder einem Diensteanbieter, der beispielsweise im Auftrag des Netzbetreibers Dienste für den Mobilteilnehmer zur Verfügung stellt, eingerichet sein. Über die Anrufstelle OP werden die Teilnehmerdaten, die nach Umfang und Art für die jeweiligen Mobilteilnehmer individuell zugeschnitten sind, in das Heimatregister HLR über die Nachricht ID eingeschrieben.

So kann beispielsweise ein spezielles Dienstepaket oder der gesamte Diensteumfang einschließlich grundlegender Telekommunikationsdienste und zusätzlicher individueller Dienste und/oder einer speziellen Teilnehmerrufnummer (Wunschrufnummer) in das für den Mobil teilnehmer zuständige Heimatregister HLR eingetragen werden. Darüber hinaus wird die im Heimatregister HLR aktivierte Sperrinformation BAR nach der erstmaligen Eintragung von gültigen Teilnehmerdaten für den Mobilteilnehmer rückgesetzt und die Sonderrufnummer OPNU gelöscht (6). Wenn der Mobilteilnehmer die spezielle Teilnehmerrufnummer (MSISDN) als Teilnehmerdatum haben möchte, die von einer üblicherweise der Mobilteilnehmerkennung IMSI zuordenbaren Mobilteilnehmerrufnummer abweicht, wird eine Nachricht ID' von der Anrufstelle OP zu einem anderen Heimatregister RHLR (Relay-Heimatregister) gesendet. Die Zuordnung der Mobilteilnehmerrufnummer erfolgt durch Vergabe einer Nummer aus dem Nummernvorrat, der dem Heimatregister HLR zur Verfügung steht. In dem Heimatregister RHLR wird eine Referenzinformation zur Identifikation des Heimatregisters HLR, in dem die Teilnehmerdaten hinterlegt sind, gespeichert (6'). Bei der Verbindungsbehandlung auf Grund eines Anrufs unter Verwendung der speziellen Teilnehmerrufnummer (MSISDN) ist somit sichergestellt, daß eine Verbindung von dem für den Mobilteilnehmer zuständigen Heimatregister RHLR zu dem durch die dem Mobilteilnehmer nicht bekannte Mobilteilnehmerkennung IMSI festgelegten Heimatregister HLR aufgebaut wird. Die Verwaltung der speziellen Teilnehmerrufnummer obliegt dem Heimatregister RHLR durch Speicherung der Referenzinformation, während die reale Mobilteilnehmerrufnumner für den Mobilteilnehmer auch in dem eigentlich für ihn zuständigen Heimatregister HLR eingetragen ist.

In einer Nachricht ISD' (Insert Subscriber Data) werden die reale Mobilteilnehmerrufnummer MSISDN und die für den Mobilteilnehmer eingetragenen Teilnehmerdaten SSD, sowie die deaktivierte Sperrinformation (BAR=NACT) vom Heimatregister HLR zum Besucherregister VLR übertragen (7), um den aus der Sonderrufnummer OPNU und der aktivierten Sperrinformation (BAR= ACT) bestehenden Eintrag durch die mitgeteilten Informationen zu ersetzen. Im Anschluß an die Aktivierung der Teilnehmerdaten einschließlich der Dienste besteht für den Mobilteilnehmer die Möglichkeit, über die Funkteilnehmerstation MS abgehende Anrufe abzusetzen und ankommende Anrufe entgegenzunehmen, die im Mobilfunknetz gemäß den in zumindestens einem Heimatregister gespeicherten Teilnehmerdaten des Mobilteilnehmers in bekannter Art und Weise behandelt und abgewickelt werden.

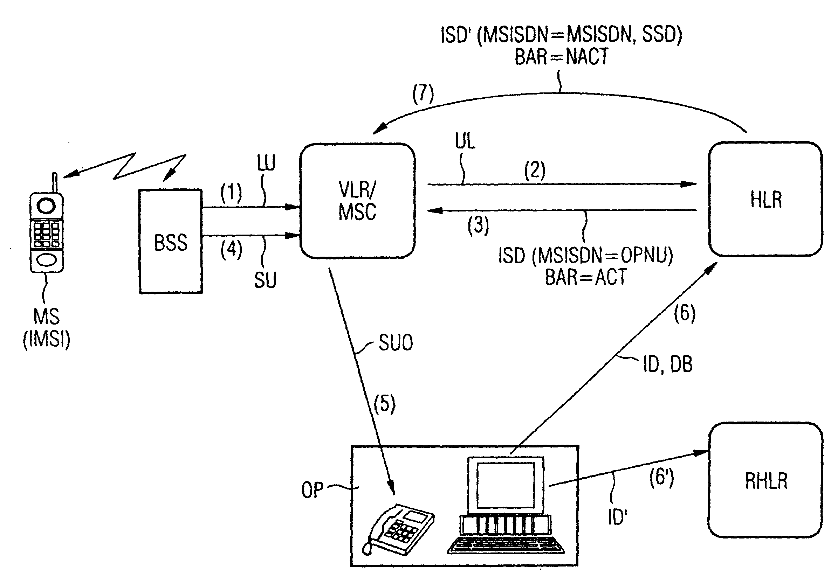

## Patentansprüche

1. Verfahren zur erstmaligen Eintragung von Teilnehmerdaten eines Mobilteilnehmers, der in einem Mobilfunknetz durch eine Mobilteilnehmerkennung (IMSI) identifizierbar ist und mit einer Funkteilnehmerstation (MS) Anrufe entgegennehmen und absetzen möchte, in zumindestens eine zentrale Teilnehmerdatenbasis (HLR),
**dadurch gekennzeichnet,** daß
a. ein Eintrag, bestehend aus einer Sonderrufnummer(OPNU) und einer Sperrinformation (BAR), die zum vorübergehenden Sperren der Anrufe für den Mobilteilnehmer gesetzt wird, in der zentralen Teilnehmerdatenbasis (HLR) gebildet wird,
b. der Eintrag von der zentralen Teilnehmerdatenbasis (HLR) in eine dezentrale Teilnehmerdatenbasis (VLR) übernommen wird, die als erste für den Mobilfunkteilnehmer auf Grund seines aktuellen Aufenthaltsort zur Aufenthaltsregistrierung zuständig ist,
c. eine Verbindung zu einer Anrufstelle (OP) auf Grund der in der dezentralen Teilnehmerdatenbasis (VLR) gespeicherten Sonderrufnummer (OPNU) aufgebaut wird, sobald vom Mobilteilnehmer ein abgehender Anruf über die Funkteilnehmerstation (MS) erstmalig abgesetzt wird, sowie
d. die Teilnehmerdaten einschließlich einer Mobilteilnehmerrufnummer (MSISDN) über die Anrufstelle (OP) in die zentrale Teilnehmerdatenbasis (HLR) eingetragen werden und in der zentralen Teilnehmerdatenbasis (HLR) die Sperrinformation (BAR) rückgesetzt sowie die Sonderrufnummer (OPNU) gelöscht wird.

2. Verfahren nach einem der vorhergehenden Ansprüche,
**dadurch gekennzeichnet,**
daß für den Mobilteilnehmer eine spezielle Teilnehmerrufnummer als Teilnehmerdatum eingetragen wird, die nicht zu den von der zentralen Teilnehmerdatenbasis (HLR) verwalteten Mobilteilnehmerrufnummern (MSISDN) gehört und von einer anderen zentralen Teilnehmerdatenbasis (RHLR) verwaltet wird.

3. Verfahren nach Anspruch 2,
**dadurch gekennzeichnet,**
daß in der anderen zentralen Teilnehmerdatenbasis (RHLR) eine Referenzinformation zur Identifikation der die Teilnehmerdaten enthaltenden zentralen Teilnehmerdatenbasis (HLR) gespeichert wird.

4. Verfahren nach einem der vorhergehenden Ansprüche,
**dadurch gekennzeichnet,**
daß durch die Sonderrufnummer (OPNU) die Verbindung zu einer Anrufstelle (OP) eines Netzbetreibers oder eines Diensteanbieters aufgebaut wird.

5. Verfahren nach einem der vorhergehenden Ansprüche,
**dadurch gekennzeichnet,**
daß Umfang und Art der Teilnehmerdaten individuell für den Mobilteilnehmer in die zentrale Teilnehmerdatenbasis (HLR) eingetragen wird.

6. Kommunikationssystem zur erstmaligen Eintragung von Teilnehmerdaten eines Mobilteilnehmers, der in einem Mobilfunknetz durch seine Mobilteilnehmerkennung (IMSI) identifizierbar ist und mit einer Funkteilnehmerstation (MS) Anrufe entgegennehmen und absetzen möchte, in eine zentrale Teilnehmerdatenbasis (HLR),
**dadurch gekennzeichnet,**
daß das Kommunikationssystem aufweist
a. mindestens eine zentrale Teilnehmerdatenbasis (HLR) zum Speichern eines Eintrags, bestehend aus einer Sonderrufnummer(OPNU) und einer Sperrinformation (BAR), die zum vorübergehenden Sperren der Anrufe für den Mobil teilnehmer setzbar ist,
b. eine dezentrale Teilnehmerdatenbasis (VLR), die als erste für den Mobilfunkteilnehmer auf Grund seines aktuellen Aufenthaltsort zur Aufenthaltsregistrierung zuständig ist, zur Übernahme des Eintrags von der zentralen Teilnehmerdatenbasis (HLR), sowie
c. eine Anrufstelle (OP), die derart angeordnet ist, daß
c.1 zu ihr eine Verbindung auf Grund der in der dezentralen Teilnehmerdatenbasis (VLR) gespeicherten Sonderrufnummer (OPNU) aufgebaut wird, sobald vom Mobilteilnehmer ein abgehender Anruf über die Funkteilnehmerstation (MS) erstmalig abgesetzt wird, und dass
c.2 über sie die Teilnehmerdaten einschließlich einer Mobilteilnehmerrufnummer (MSISDN) in die zentrale Teilnehmerdatenbasis (HLR) eingetragen werden und in der zentralen Teilnehmerdatenbasis (HLR) die Sperrinformation (BAR) rückgesetzt sowie die Sonderrufnummer (OPNU) gelöscht wird.

7. Kommunikationssystem nach Anspruch 6,
**dadurch gekennzeichnet,**
daß die Anrufstelle (OP) derart angeordnet ist, daß über sie eine Referenzinformation zur Identifikation der die Teilnehmerdaten enthaltenden zentralen Teilnehmerdatenbasis (HLR) in einer anderen zentralen Teilnehmerdatenbasis (RHLR) gespeichert wird.

## Claims

1. Method for the first registration of subscriber data of a mobile subscriber, which can be identified in a mobile radio network by a mobile subscriber identifier (IMSI) and wishes to receive and make calls using a radio subscriber station (MS), in at least one central subscriber database (HLR),
characterized in that
a. an entry, composed of a special call number (OPNU) and an item of barring information (BAR), which is set in order to temporarily bar the calls for the mobile subscriber, is formed in the central subscriber database (HLR),
b. the entry from the central subscriber database (HLR) is transferred into a decentralized subscriber database (VLR), which has primary responsibility for registering the location of the mobile radio subscriber on the basis of his current location,
c. a connection is set up to a call point (OP) on the basis of the special call number (OPNU) stored in the decentralized subscriber database (VLR) as soon as an outgoing call is made for the first time by the mobile subscriber using the radio subscriber station (MS), and
d. the subscriber data, including a mobile subscriber call number (MSISDN) are entered into the central subscriber database (HLR) using the call point (OP), and the barring information (BAR) is reset in the central subscriber database (HLR) and the special call number (OPNU) is deleted.

2. The method according to one of the preceding claims, characterized in that a specific subscriber call number for the mobile subscriber is entered as an item of subscriber data which is not associated with the mobile subscriber call numbers (MSISDN) which are administered by the central subscriber database (HLR), and is administered by a different central subscriber database (RHLR).

3. The method according to Claim 2, characterized in that an item of reference information for identifying the central subscriber database (HLR) which contains the subscriber data is stored in the other central subscriber database (RHLR).

4. The method according to one of the preceding claims, characterized in that the connection to a call point (OP) of a network operator or of a service provider is set up by means of the special call number (OPNU).

5. The method according to one of the preceding claims, characterized in that the scope and type of the subscriber data is entered individually for the mobile subscriber in the central subscriber database (HLR).

6. Communication system for the first registration of subscriber data of a mobile subscriber, which can be identified in a mobile radio network by its mobile subscriber identifier (IMSI) and wishes to receive and make calls using a radio subscriber station (MS), in a central subscriber database (HLR), characterized in that the communication system has
a. at least one central subscriber database (HLR) for storing an entry, composed of a special call number (OPNU) and an item of barring information (BAR), which can be set in order to temporarily bar the calls for the mobile subscriber,
b. a decentralized subscriber database (VLR) which has primary responsibility for registering the location of the mobile subscriber on the basis of his current location, for transferring the entry from the central subscriber database (HLR), and
c. a call point (OP) which is arranged in such a way that
c.1 a connection is set up to said call point (OP) on the basis of the special call number (OPNU) stored in the decentralized subscriber database (VLR) as soon as an outgoing call is made for the first time by the mobile subscriber using the radio subscriber station (MS), and in that
c.2 the call point (OP) is used to enter the subscriber data, including a mobile subscriber call number (MSISDN), into the central subscriber database (HLR), and the barring information (BAR) is reset in the central subscriber database (HLR), and the special call number (OPNU) is deleted.

7. Communication system according to Claim 6, characterized in that the call point (OP) is arranged in such a way that said call point (OP) is used to store an item of reference information for identifying the central subscriber database (HLR), which contains the subscriber data, in another central subscriber database (RHLR) .

## Revendications

1. Procédé pour le premier enregistrement, dans au moins une base de données d'abonnés centralisée (HLR), des données d'un abonné mobile, qui peut être identifié dans un réseau de téléphonie mobile par un indicatif d'abonné mobile (IMSI) et qui souhaite recevoir et émettre des appels avec un poste radio d'abonné (MS),
**caractérisé par le fait que**
a. un enregistrement, comprenant un numéro d'appel spécial (OPNU) et une information de blocage (BAR), qui est destinée à interdire provisoirement les appels destinés à l'abonné mobile, est effectué dans la base de données d'abonnés centralisée (HLR),
b. l'enregistrement est transféré de la base de données d'abonnés centralisée (HLR) dans une base de données d'abonnés décentralisée (VLR), qui est la première compétente, en raison de son emplacement actuel, pour l'enregistrement de l'emplacement de l'abonné radio mobile,
c. une liaison est établie avec un poste d'appel (OP), sur la base du numéro d'appel spécial (OPNU) mémorisé dans la base de données d'abonnés décentralisée (VLR), dés que l'abonné mobile émet un premier appel par l'intermédiaire du poste radio d'abonné (MS), et
d. les données d'abonné, y compris un numéro d'appel d'abonné mobile (MSISDN), sont enregistrées, par l'intermédiaire du poste d'appel (OP), dans la base de données d'abonnés centralisée (HLR) et, dans la base de données d'abonnés centralisée (HLR), l'information de blocage (BAR) est remise à zéro et le numéro d'appel spécial (OPNU) est effacé.

2. Procédé selon l'une des revendications précédentes
**caractérisé par le fait**
que, pour l'abonné mobile, on enregistre, en tant que donnée d'abonné, un numéro d'appel spécial, qui ne fait pas partie des numéros d'appel d'abonné mobile (MSISDN) gérés par la base de données d'abonnés centralisée (HLR) et qui est géré par une autre base de données d'abonnés centralisée (RHLR).

3. Procédé selon la revendication 2
**caractérisé par le fait**
que, dans l'autre base de données d'abonnés centralisée (RHLR), une information de référence est mémorisée pour l'identification de la base de données d'abonnés centralisée (HLR) qui comporte les données de l'abonné.

4. Procédé selon l'une des revendications précédentes
**caractérisé par le fait**
que, grâce au numéro d'appel spécial (OPNU), on établit la liaison avec un poste d'appel (OP) d'un exploitant de réseau ou d'un prestataire de services.

5. Procédé selon l'une des revendications précédentes
**caractérisé par le fait**
que, dans la base de données d'abonnés centralisée (HLR), on enregistre la quantité et le genre de données d'abonné, individuellement pour l'abonné mobile.

6. Système de communication pour le premier enregistrement, dans une base de données d'abonnés centralisée (HLR), des données d'un abonné mobile, qui peut être identifié dans un réseau de téléphonie mobile par son indicatif d'abonné mobile (IMSI) et qui souhaite recevoir et émettre des appels avec un poste radio d'abonné (MS),
**caractérisé par le fait que**
le système de communication comporte
a. au moins une base de données d'abonnés centralisée (HLR) pour mémoriser un enregistrement, comprenant un numéro d'appel spécial (OPNU) et une information de blocage (BAR), pouvant être assignée pour interdire provisoirement les appels destinés à l'abonné mobile,
b. une base de données d'abonnés décentralisée (VLR), qui est la première compétente, en raison de son emplacement actuel, pour l'enregistrement du lieu de séjour de l'abonné radio mobile, et qui prend en charge l'enregistrement de la base de données d'abonnés centralisée (HLR), ainsi que
c. un poste d'appel (OP) placé de telle sorte
c.1 qu'une liaison est établie avec lui, sur la base du numéro d'appel spécial (OPNU) mémorisé dans la base de données d'abonnés décentralisée (VLR), dès que l'abonné mobile émet un premier appel par l'intermédiaire du poste radio d'abonné (MS), et
c.2 que, par son intermédiaire, les données d'abonné, y compris un numéro d'appel d'abonné mobile (MSISDN), sont enregistrées dans la base de données d'abonnés centralisée (HLR) et, dans la base de données d'abonnés centralisée (HLR), l'information de blocage (BAR) est remise à zéro et le numéro d'appel spécial (OPNU) est effacé.

7. Système de communication selon la revendication 6
**caractérisé par le fait**
que le poste d'appel (OP) est disposé de telle sorte que, par son intermédiaire, une information de référence, destinée à l'identification de la base de données d'abonnés centralisée (HLR), qui renferme les données d'abonné, est enregistrée dans une autre base de données d'abonnés centralisée (RHLR).
